# EUROPÄISCHE PATENTSCHRIFT

(11) **EP 0 556 481 B1**
(45) Veröffentlichungstag und Bekanntmachung des Hinweises auf die Patenterteilung: **05.03.1997**
(21) Anmeldenummer: 92121735.2
(22) Anmeldetag: 21.12.1992
(51) Int. Cl.: H02H 7/06, H02P 9/10, H02P 9/08

(54) **Verfahren und Einrichtung zum Betrieb einer Synchronmaschine**
Procedure and device for operating a synchronous machine
Procédé et dispositif pour l'opération d'une machine synchrone

(30) Priorität: 17.02.1992 DE 4204677
(43) Veröffentlichungstag der Anmeldung: 25.08.1993
(73) Patentinhaber: ASEA BROWN BOVERI AG, 5401 Baden (CH)
(72) Erfinder: Blatter, Richard, CH-5400 Ennetbaden (CH)
(74) Vertreter: Rzehak, Herbert

(56) Entgegenhaltungen:
- EP-A- 0 446 954
- US-A- 3 591 844
- US-A- 3 764 815

## Beschreibung

### TECHNISCHES GEBIET

Bei der Erfindung wird ausgegangen von einem Verfahren und einer Einrichtung zum Betrieb einer Synchronmaschine nach dem Oberbegriff der Patentansprüche 1 und 2.

### STAND DER TECHNIK

Mit den Oberbegriffen der Patentansprüche 1 und 2 nimmt die Erfindung auf einen Stand der Technik Bezug, wie er aus der ASEA-Zeitschrift 1976, H. 4, S. 75 - 80, bekannt ist. Dort wird zum Anlassen von Pumpenturbinensätzen mit Synchronmaschinen ein statischer Frequenzumrichter verwendet, dessen Zwischenkreisspannung zum Erregen der Rotorwicklungen herangezogen wird. Ab einer Frequenz von 5 Hz wird von einem selbstgeführten System mit Schwingkreissteuerung auf eine lastgeführte Kommutierung mit Hilfe der vom Motor erzeugten Spannung umgeschaltet. Bei etwa 15 % der Nenndrehzahl wird das Wasser in der Pumpenturbine heruntergedrückt, so dass das Laufrad während des restlichen Hochlaufs in Luft rotiert. Die Anlage ist mit einer integrierten Schutzeinrichtung zur Entdeckung und Meldung innerer Störungen, wie Überspannungen und Erdschlussfehler, versehen. Zum Schutz gegen Überströme ist eine elektronische Impulssperre vorhanden.

Die DE-OS 21 10 747 zeigt einen vergleichbaren Stand der Technik zum Anlassen von Gasturbinen oder Pumpspeichersätzen.

Eine redundante Verwendung der Stromrichter des Frequenzumrichters in einem Fehlerfall ist nicht vorgesehen.

Zum einschlägigen Stand der Technik wird zusätzlich auf die Firmenschrift der Schweizer Firma BBC Brown, Boveri & Cie, Baden, Veröffentlichungs-Nr.: CH-E 2.0340.0 E, Titel: Standardized Starting Equipment, Januar 1979, S. 1 - 8, verwiesen, aus der es bekannt ist, Synchronmaschinen, die z. B. in Verbindung mit Gasturbinen, Pumpspeicherwerken und Synchronkompensatoren verwendet werden können, mit einem statischen Frequenzumrichter zu starten.

### DARSTELLUNG DER ERFINDUNG

Die Erfindung, wie sie in den Patentansprüchen 1 und 2 definiert ist, löst die Aufgabe, ein Verfahren und eine Einrichtung zum Betrieb einer Synchronmaschine der eingangs genannten Art derart weiterzuentwickeln, dass deren Fehlersicherheit erhöht wird.

Ein Vorteil der Erfindung besteht darin, dass durch eine redundante Verwendung der Stromrichter des Umrichters eine höhere Verfügbarkeit der Anlage resultiert.

Die Hochfahr- und Erregungseinrichtung für die Synchronmaschine ist auch in Verbindung mit Gasturbinen verwendbar.

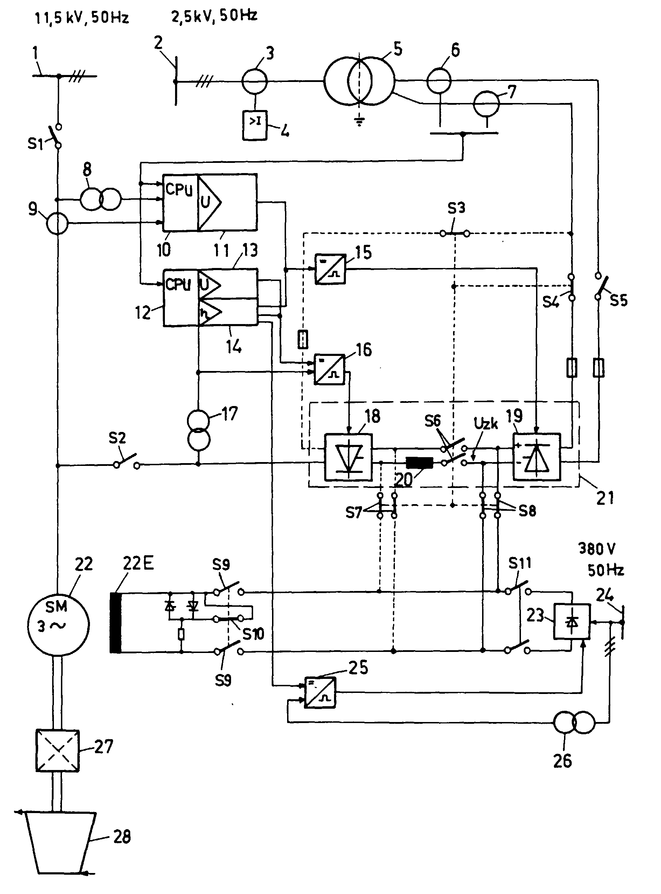

### KURZE BESCHREIBUNG DER ZEICHNUNG

Die Erfindung wird nachstehend anhand eines Ausführungsbeispiels erläutert. Die einzige Figur zeigt eine Hochfahr- und Erregungseinrichtung für eine Synchronmaschine, die an eine Gasturbine gekoppelt ist.

### WEGE ZUR AUSFÜHRUNG DER ERFINDUNG

Eine Synchronmaschine (22) ist statorseitig einerseits über einen Stromwandler (9) und einen Schalter (S1) an ein Drehstromnetz bzw. Wechselstromnetz (1) mit einer Wechselspannung von 11,5 kV und einer Frequenz von 50 Hz und andererseits über einen Schalter (S2) an einen Umrichter (21) angeschlossen. Der Umrichter (21) weist 2 steuerbare Stromrichter (18, 19) auf, die über einen Gleichstromzwischenkreis mit einer Zwischenkreisdrossel (20) und einem Doppelschalter (S6) miteinander verbunden sind. Eine Zwischenkreisgleichspannung (Uzk) kann bei geöffnetem Doppelschalter (S6) über geschlossene Doppelschalter (S8) und (S9) an eine Erregerwicklung (22E) der Synchronmaschine (22) angelegt werden. Bei geschlossenem Doppelschalter (S6) und offenem Doppelschalter (S8) kann die Zwischenkreisgleichspannung (Uzk) über einen Doppelschalter (S7) an die Erregerwicklung (22E) angelegt werden, wie gestrichelt angedeutet.

Der Stromrichter (19) ist über Sicherungen, Schalter (S4, S5) und Stromwandler (6, 7) an eine Sekundärwicklung eines Stromrichtertransformators (5) angeschlossen, der primärseitig über einen Stromwandler (3) an ein 3phasiges Hilfsnetz bzw. Wechselstromnetz (2) mit einer Wechselspannung von 2,5 kV und einer Frequenz von 50 Hz angeschlossen ist. Mit (4) ist ein Schutzrelais bezeichnet, das an den Stromwandler (3) angeschlossen ist und bei einem vorgebbaren Überstrom abschaltet.

Die Stromwandler (6, 7) liefern Stromsignale an Mikroprozessoren bzw. Schnellrechner (10, 12). Der Schnellrechner (10) erhält eingangsseitig ein weiteres Stromsignal von dem Stromwandler (9) und ein Netzspannungssignal von einem Spannungswandler (8), der eingangsseitig mit der Statorwicklung der Synchronmaschine (22) in Verbindung steht. Ausgangsseitig ist der Schnellrechner (10) über einen automatischen Spannungsregler (11) mit einem Zündimpulswandler (15) verbunden, der Zündsignale an den Stromrichter (19) liefert. Der Schnellrechner (12) ist ausgangsseitig mit einem handbetätigbaren Spannungsregler (13) und mit einem lastkommutierbaren bzw. Anfahrregler (14) verbunden. Der Anfahrregler (14) wirkt ausgangsseitig auf den Zündimpulswandler (15) und auf einen weiteren Zündimpulswandler (16), welcher ausgangsseitig Zündsignale an den Stromrichter (18) liefert. Der Zündimpulswandler (16) erhält eingangsseitig zusätzlich ein Ausgangssignal des Spannungsreglers (13) sowie ein Spannungssignal von einem Spannungswandler (17), der über den Schalter (S2) mit dem Rotor der Synchronmaschine (22) in Verbindung steht und sein Ausgangssignal auch dem Anfahrregler (14) zur Verfügung stellt.

Ganz am Anfang des Hochfahrens wird die Erregerwicklung (22E) der Synchronmaschine (22) über geschlossene Doppelschalter (S9) und (S11) von einem Startstromrichter (23) mit Gleichstrom gespeist. Der Startstromrichter (23) erhält seine Energie aus einer Starterregerstromquelle (24) mit einer Wechselspannung von 380 V und einer Frequenz von 50 Hz; gezündet wird er von einem Zündimpulswandler (25). Der Zündimpulswandler (25) erhält ein Steuersignal von dem Anfahrregler (14) und von einem Spannungswandler (26), der an die Starterregerstromquelle (24) angeschlossen ist. Mit (S10) ist ein Schalter bezeichnet, der geschlossen ist, wenn der Doppelschalter (S9) offen ist, und der bei geschlossenem Doppelschalter (S9) offen ist. Ein Schalter (S3) ist einerseits mit dem Schalter (S4) und andererseits über eine Sicherung mit dem Wechselstromeingang des Stromrichters (18) verbunden, vgl. die gestrichelte Linie. Alle durch gestrichelte Linien verbunden Schalter sind geöffnet, wenn die zugehörigen, nicht gestrichelt verbundenen Schalter geschlossen sind, und umgekehrt.

Die Synchronmaschine (22) ist rotorseitig über ein Getriebe (27) mit einer Gasturbine (28) antriebsmässig verbunden.

Das Getriebe (27) kann auch fehlen. Die Gasturbine (28) kann von Verbrennungsgasen eines Dieselmotors oder von einer speziellen Brennkammer gespeist sein und ggf. mit einer oder mit mehreren Dampfturbinen zusammenwirken.

Wichtig ist, dass die Erregergleichspannung für die Erregerwicklung (22E) bei Netzbetrieb der Synchronmaschine (22) dem Gleichstromzwischenkreis des Umrichters (21) entnommen wird.

Das Hochfahren der Synchronmaschine (22) erfolgt bei geöffnetem Schalter (S1) und geschlossenem Schalter (S2) durch den Stromrichter (18), der als Wechselrichter mit zunehmender Frequenz betrieben und aus dem Gleichstromzwischenkreis gespeist wird.

Bei Erreichen der Nenndrehzahl der Synchronmaschine (22) wird der Schalter (S2) geöffnet und der Schalter (S1) geschlossen.

Die zusätzliche Anspeisung des Stromrichters (18) über den Schalter (S3) erlaubt jedoch im nachfolgenden Dauerbetrieb der Synchronmaschine (22) eine 2kanalige Erregung. Fällt beim Dauerbetrieb z. B. der Stromrichter (19) fehlerbedingt aus, so kann der Stromrichter (18) über den Schalter (S3) an das Wechselstromnetz (2) angeschlossen und als Gleichrichter betrieben werden, um den für die Erregung der Erregerwicklung (22E) erforderlichen Gleichstrom zu erzeugen. Fällt z. B. der Stromrichter (18) fehlerbedingt aus, so kann der Stromrichter (19) den erforderlichen Gleichstrom für die Erregerwicklung (22E) liefern.

Es versteht sich, dass die Wechselstromnetze (1) und (2) sowie die Starterregerstromquelle (24) mit anderen als den angegebenen Wechselspannungen und z. B. mit 60 Hz betrieben werden können. Der Stromrichtertransformator (5) könnte auch an das Wechselstromnetz (1) angeschlossen sein.

## Patentansprüche

1. Verfahren zum Betrieb einer Synchronmaschine (22)
a) wobei mindestens eine Erregerwicklung (22E) des Rotors der Synchronmaschine (22) von der Zwischenkreisgleichspannung (Uzk) eines Umrichters (21) gespeist wird und
b) wobei beim Anlauf mindestens eine Statorwicklung der Synchronmaschine (22) durch den Umrichter (21) gespeist und im stationären Betrieb auf Netzspeisung umgeschaltet wird,
dadurch gekennzeichnet,
c) dass im stationären Betrieb bei einem Fehler bzw. dem Ausfall eines Stromrichters (18, 19) des Umrichters (21) der intakte andere Stromrichter (19, 18) die Speisung der Erregerwicklung übernimmt.

2. Einrichtung zum Betrieb einer Synchronmaschine (22)
a) deren Statorwicklung beim Anlauf über einen Schalter (S2) durch einen Umrichter (21) mit einem Gleichstromzwischenkreis gespeist wird und im stationären Betrieb auf Netzspannung umgeschaltet wird,
b) deren Erregerwicklung (22E) mit dem Gleichstromzwischenkreis dieses Umrichters (21) zur Gleichstromerregung der Synchronmaschine (22) verbunden ist,
dadurch gekennzeichnet,
c) dass die beiden Stromrichter (18, 19) des Umrichters derart redundant ansteuerbar sind, dass bei einem fehlerbedingten Ausfall des einen Stromrichters (19) im stationären Fall der andere Stromrichter (18) die Speisung der Erregerwicklung übernimmt.

3. Einrichtung nach Anspruch 2, dadurch gekennzeichnet, dass der Rotor der Synchronmaschine (22) mechanisch mit einer Gasturbine (28) in Wirkverbindung steht.

## Claims

1. A method for operating a synchronous machine (22), in which
a) at least one exciter winding (22E) of the rotor of the synchronous machine (22) is fed from the link direct voltage (Uzk) of a frequency converter (21), and in which
b) during start-up, at least one stator winding of the synchronous machine (22) is fed by the frequency converter (21) and is switched to line feed in steady-state operation, characterized in that
c) in steady-state operation, in the event of a fault or the failure of a static converter (18, 19) of the frequency converter (21), the operational other static converter (19, 18) takes over feeding of the exciter winding.

2. A device for operating a synchronous machine (22),
a) the stator winding of which, on start-up, is fed by a frequency converter (21) with a direct-current link via a switch (S2) and is switched to line voltage in steady-state operation,
b) the exciter winding (22E) of which is connected to the direct-current link of this frequency converter (21) for the direct-current excitation of the synchronous machine (22), characterized in that
c) the two static converters (18, 19) of the frequency converter are redundantly selectable in such a manner that in the event of a failure of one static converter (19) due to a fault, the other static converter (18) takes over the feeding of the exciter winding in the steady-state case.

3. A device according to Claim 2, characterized in that the rotor of the synchronous machine (22) is mechanically effectively connected to a gas turbine (28).

## Revendications

1. Procédé pour l'opération d'une machine synchrone (22)
a) avec lequel au moins un enroulement d'excitation (22E) du rotor de la machine synchrone (22) est alimenté par la tension continue intermédiaire (Uzk) d'un convertisseur de fréquence (21) et
b) avec lequel au moins un enroulement du stator de la machine synchrone (22) est alimenté par le convertisseur de fréquence (21) lors du démarrage puis alimenté à partir du secteur en régime permanent,
caractérisé par le fait
c) qu'en cas de défaut ou de panne d'un convertisseur statique (18, 19) du convertisseur de fréquence (21) en régime permanent, l'autre convertisseur statique (18, 19) intact prend en charge l'alimentation de l'enroulement d'excitation.

2. Dispositif pour l'opération d'une machine synchrone (22)
a) dont l'enroulement du stator est alimenté lors du démarrage par un convertisseur de fréquence (21) muni d'un circuit intermédiaire à courant continu par le biais d'un commutateur (S2) puis alimenté à partir du secteur en régime permanent,
b) dont l'enroulement d'excitation (22E) est relié au circuit intermédiaire à courant continu de ce convertisseur de fréquence (21) afin d'exciter la machine synchrone (22) en courant continu,
caractérisé par le fait
c) que les deux convertisseurs statiques (18, 19) du convertisseur de fréquence sont commandables de façon redondante de telle façon qu'en cas de panne liée à une défaillance de l'un des convertisseurs statiques (19) en régime permanent, l'autre convertisseur statique (18) prenne en charge l'alimentation de l'enroulement d'excitation.

3. Dispositif selon la revendication 2, caractérisé par le fait que le rotor de la machine synchrone (22) est en relation mécanique active avec une turbine à gaz (28).
